# EUROPÄISCHE PATENTSCHRIFT

(11) **EP 3 851 622 B1**
(45) Veröffentlichungstag und Bekanntmachung des Hinweises auf die Patenterteilung: **23.03.2022**
(21) Anmeldenummer: 20152336.2
(22) Anmeldetag: 17.01.2020
(51) Int. Cl.: E05F 15/622

(54) **ANTRIEBSVORRICHTUNG ZUM BEWEGEN EINES BEWEGBAREN TEILS EINES MÖBELS SOWIE EINE BESCHLAGANORDNUNG UND EIN MÖBEL MIT EINER SOLCHEN ANTRIEBSVORRICHTUNG**
DRIVE DEVICE FOR MOVING A DISPLACEABLE PART OF A PIECE OF FURNITURE AND A FITTING ARRANGEMENT AND FURNITURE COMPRISING SUCH A DRIVE DEVICE
DISPOSITIF D'ENTRAÎNEMENT PERMETTANT DE DÉPLACER UNE PARTIE MOBILE D'UN MEUBLE AINSI QU'AGENCEMENT DE FERRURE ET MEUBLE DOTÉ D'UN TEL DISPOSITIF D'ENTRAÎNEMENT

(43) Veröffentlichungstag der Anmeldung: 21.07.2021
(73) Patentinhaber: FLAP Competence Center kft, 1184 Budapest (HU)
(72) Erfinder: BENDEFY, András, 1125 Budapest (HU)
(74) Vertreter: Neumann Müller Oberwalleney Patentanwälte PartG mbB

(56) Entgegenhaltungen:
- EP-A2- 2 669 458
- CN-A- 105 840 035
- DE-U1-202015 107 036
- DE-U1-202018 104 555

## Beschreibung

Die vorliegende Erfindung betrifft eine Antriebsvorrichtung zum Bewegen eines bewegbaren Teils eines Möbels zwischen einer Schließ- und einer Offenstellung sowie eine Beschlaganordnung und ein Möbel mit einer solchen Antriebsvorrichtung. Möbel können einerseits offen gestaltet sein, beispielsweise als Regal, oder aber zumindest teilweise geschlossen, wobei ein bewegbares Teil das Öffnen und Verschließen des Möbels ermöglicht. Als bewegbares Teil kommen insbesondere Türen, Deckel und Schubladen mit schließenden Fronten in Betracht. Aus Komfortaspekten kann es bei Möbeln vorgesehen sein, dass die bewegbaren Teile motorisch zwischen einer Schließ- und einer Offenstellung bewegt werden können.

Aus der DE 20 2010 016 982 U1 ist eine Bewegungsvorrichtung für ein bewegbares Möbelteil mit wenigsten einem Stellglied zur Bewegung des bewegbaren Möbelteils bekannt. Über einen Stellantrieb ist das Stellglied derart antreibbar, dass das bewegbare Möbelteil von der Schließ- in die Offenstellung und umgekehrt bewegbar ist. Der Stellantrieb ist mit einem ersten Zahnrad und mit einem zweiten Zahnrad antriebsverbunden. Das zweite Zahnrad kann das Stellglied so um eine Schwenkachse schwenken, dass das Stellglied das bewegbare Möbelteil zwischen einer Schließstellung und einer Offenstellung bewegen kann. Zusätzlich ist ein Freilauf zwischen dem zweiten Zahnrad und dem Stellelement vorgesehen, der es ermöglicht, das bewegbare Möbelteil auch manuell zu öffnen. Aus der DE 20 2015 107036 U1 ist eine weitere Antriebsvorrichtung bekannt.

Hiervon ausgehend liegt der vorliegenden Erfindung die Aufgabe zugrunde, eine Antriebsvorrichtung zum Bewegen eines bewegbaren Teils eines Möbels zwischen einer Schließ- und einer Offenstellung bereitzustellen, die wahlweise manuell oder motorisch angetrieben verstellt werden kann und kompakt baut. Ferner soll eine Beschlaganordnung und ein Möbel mit einer solchen Antriebsvorrichtung bereitgestellt werden.

Zur Lösung der Aufgabe wird eine Antriebsvorrichtung zum Bewegen eines bewegbaren Teils eines Möbels zwischen einer Schließ- und einer Offenstellung, vorgeschlagen, umfassend: einen Motor, der über eine Lageranordnung mit einem Korpus des Möbels schwenkbar verbindbar ist, ein erstes Gewindeelement, das von dem Motor drehend antreibbar ist, und ein zweites Gewindeelement, das mit dem ersten Gewindeelement in Eingriff ist, wobei das zweite Gewindeelement bei Rotation des ersten Gewindeelements entlang diesem translatorisch verschoben wird, und ein Stellelement, das relativ zu dem ersten Gewindeelement entlang einer Bewegungsachse verschiebbar angeordnet ist und einen ersten Anschlag sowie einen zweiten Anschlag aufweist, wobei das zweites Gewindeelement relativ zum Stellelement zwischen dem ersten Anschlag und dem zweiten Anschlag des Stellelements axial verstellbar angeordnet ist, und ein Beschlagelement, das mit dem Stellelement schwenkbar verbunden und mit dem bewegbaren Teil verbindbar ist.

Die Antriebsvorrichtung weist den Vorteil auf, dass diese einen kleinen Bauraum beansprucht.

Das bewegbare Teil des Möbels kann insbesondere als Klappe, Deckel, Türe oder Schublade ausgestaltet sein.

Das erste Gewindeelement und das zweite Gewindeelement können unmittelbar oder mittelbar über zumindest ein Zwischenelement miteinander in Eingriff sein und beispielsweise zusammen mit dem zumindest einen Zwischenelement Teil eines Kugelgewindetriebes sein. Das erste Gewindeelement kann ein Außengewinde aufweisen, und das zweite Gewindeelement kann ein Innengewinde aufweisen, das mit dem Außengewinde des ersten Gewindeelements in Eingriff steht. Alternativ kann das erste Gewindeelement ein Innengewinde aufweisen, und das zweite Gewindeelement kann ein Außengewinde aufweisen, das mit dem Innengewinde des ersten Gewindeelements in Eingriff steht.

Eine Drehachse des Motors und eine Drehachse des ersten Gewindeelements können koaxial zu der Bewegungsachse angeordnet sein. Das Stellelement kann entlang der Bewegungsachse von einer Anlage mit dem ersten Anschlag bis zu einer Anlage mit dem zweiten Anschlag verschiebbar sein.

In einer möglichen Ausführungsform kann das Stellelement hülsenförmig ausgebildet sein, wobei sich der erst und der zweite Anschlag jeweils von einem hohlzylinderförmigen Abschnitt in radialer Richtung nach innen erstrecken. Das zweite Gewindeelement kann in dieser Ausführungsform einen Schieberabschnitt aufweisen, der sich von einem stabförmigen Gewindeabschnitt aus nach radial außen erstreckt und axial zwischen dem ersten Anschlag und dem zweiten Anschlag des Stellelementes angeordnet ist. Eine Innenkontur des Stellelementes kann in dieser Ausführungsform zumindest in einem Teilbereich komplementär zu einer Außenkontur zumindest eines Teilbereichs des zweiten Gewindeelements ausgestaltet sein. Der Teilbereich des Stellelements kann dabei insbesondere der Bereich zwischen dem ersten Anschlag und dem zweiten Anschlag sein. Der Teilbereich des zweiten Gewindeelementes kann dabei insbesondere der Schieberabschnitt sein.

Der erste Anschlag und der zweite Anschlag können in dieser Ausführungsform jeweils eine mittige Öffnung aufweisen, deren größter einbeschriebener Zylinder einen kleineren Durchmesser aufweist als die zylinderförmige Einhüllende des zweiten Gewindeelements. Das erste Gewindeelement kann sich jeweils durch die mittige Öffnung des ersten Anschlags und des zweiten Anschlags hindurch erstrecken. Alternativ kann zumindest der dem Motor zugewandte Anschlag von dem ersten Anschlag und dem zweiten Anschlag eine mittige Öffnung aufweisen, durch die sich das zweite Gewindeelement hindurcherstreckt.

Alternativ kann das Stellelement in einer weiteren Ausführungsform stabförmig ausgebildet sein, wobei sich der erste und der zweite Anschlag jeweils von einem Stababschnitt in radialer Richtung nach außen erstrecken. Das zweite Gewindeelement kann eine mittige Öffnung aufweisen, durch die das Stellelement hindurch geführt ist und deren größter einbeschriebener Zylinder einen kleineren Durchmesser aufweist als jeweils die zylinderförmige Einhüllende des ersten Anschlags und des zweiten Anschlags. Insbesondere kann sich das Stellelement mit dem Teil des Stababschnitts zwischen dem ersten Anschlag und dem zweiten Anschlag durch die mittigen Öffnung des zweiten Gewindeelement des hindurch erstrecken. Alternativ kann bei der stabförmigen Ausführungsform des Stellelements das zweite Gewindeelement einen Schiebeabschnitt aufweisen, der sich von einem hohlzylinderförmigen Gewindeabschnitt nach radial innen erstreckt und axial zwischen dem ersten Anschlag in dem zweiten Anschlag des Stellelements angeordnet ist. In dieser Ausführungsform kann eine Innenkontur des zweiten Gewindeelements zumindest in einem Teilbereich komplementär zu einer Außenkontur zumindest eines Teilbereichs des Stellelements ausgestaltet sein.

Der erste und/oder der zweite Anschlag können in allen zuvor genannten Ausführungsformen als vollumfänglicher Ring ausgebildet sein oder sich nur über einen Teil des Umfanges erstrecken.

Die Lageranordnung kann ein Lagerelement und ein Gehäuse umfassen. Der Motor kann in dem Gehäuse aufgenommen sein und das Gehäuse kann über das Lagerelement mit dem Korpus des Möbels schwenkbar verbindbar sein. Der Motor kann somit zumindest mittelbar mit dem Korpus des Möbels schwenkbar verbindbar sein. Das Gehäuse kann einen Aufnahmeraum bilden, in dem der Motor aufgenommen ist. Das Stellelement kann axial verschiebbar in dem Gehäuse gelagert sein, insbesondere entlang der Bewegungsachse. Das Gehäuse kann aus einem einzelnen Teil hergestellt sein und einen ersten Zylinderabschnitt aufweisen, in dem der Motor aufgenommen ist, und einen zweiten Zylinderabschnitt, in dem das Stellelement axial verschiebbar gelagert ist.

Alternativ kann der Motor über das Lagerelement schwenkbar und das Gehäuse fest mit dem Korpus des Möbels verbindbar sein. Das Gehäuse kann in diesem Fall auch als Abdeckelelement bezeichnet werden. Das Gehäuse kann zumindest das erste Gewindeelement so einhausen, dass im montierten Zustand der Antriebsvorrichtung ein versehentliches Berühren mit dem ersten Gewindeelement ausgeschlossen ist.

Es kann ein Sensor zum Erfassen eines die Längsposition des zweiten Gewindeelements repräsentierenden Signals vorgesehen sein. Der Sensor kann insbesondere als Drehwinkelsensor zur Detektion der Winkelposition des ersten Gewindeelements und/oder des zweiten Gewindeelement ausgestaltet sein.

Zur Lösung der Aufgabe wird ferner eine Beschlaganordnung zum schwenkbaren Befestigen eines bewegbaren Teils eines Möbels an einen Korpus des Möbels, vorgeschlagen, umfassend: eine Antriebsvorrichtung nach einer der zuvor genannten Ausgestaltungen und eine federkraftbeaufschlagte Halteanordnung, durch die das bewegbare Teil des Möbels in der Offenstellung fixierbar ist.

Auch die Beschlaganordnung weist den Vorteil auf, dass diese einen kleinen Bauraum beansprucht.

Zur Lösung der Aufgabe wird zudem ein Möbel vorgeschlagen, umfassend: einen Korpus, ein bewegbares Teil, das mit dem Korpus schwenkbar befestigt ist, eine Antriebsvorrichtung zum Bewegen des bewegbaren Teils zwischen einer Schließ- und einer Offenstellung nach einer zuvor genannten Ausgestaltung, und eine federkraftbeaufschlagte Halteanordnung, durch die das bewegbare Teil in der Offenstellung fixierbar ist.

Das Möbel weist den Vorteil auf, dass durch die Antriebsvorrichtung ein kleiner Bauraum eingenommen wird und somit der nutzbare Raum innerhalb des Möbels vergrößert wird.

Nachfolgend werden anhand der Figurenzeichnungen bevorzugte Ausführungsbeispiele erläutert. Hierin zeigt
- Figur 1: ein Möbel mit einer Beschlaganordnung mit einer erfindungsgemäßen Antriebsvorrichtung in einer ersten Ausführungsform in einer Schnittdarstellung, wobei die Antriebsvorrichtung in neutraler, geschlossener Stellung ist;
- Figur 2: das Möbel aus Figur 1 mit der Antriebsvorrichtung in einer aktiven, geöffneten Stellung;
- Figur 3: das Möbel aus Figur 1 mit der Antriebsvorrichtung in neutraler, geöffneter Stellung;
- Figur 4: das Möbel aus Figur 1 mit der Antriebsvorrichtung in aktiver, geschlossener Stellung;
- Figur 5: schematisch eine erfindungsgemäße Antriebsvorrichtung in einer zweiten Ausführungsform,
- Figur 6: schematisch eine erfindungsgemäße Antriebsvorrichtung in einer dritten Ausführungsform, und
- Figur 7: schematisch eine erfindungsgemäße Antriebsvorrichtung in einer vierten Ausführungsform.

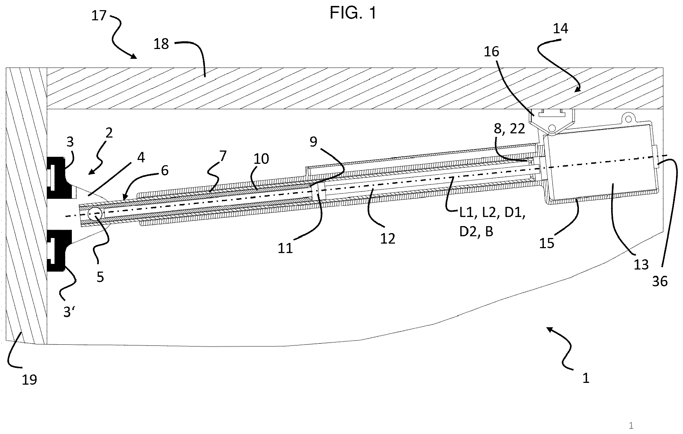

In den Figuren 1 bis 4, die nachfolgend gemeinsam beschrieben werden, wird ein Möbel 17 mit einer Beschlaganordnung, die eine erfindungsgemäße Antriebsvorrichtung 1 und eine Halteanordnung 21 zum schwenkbaren Befestigen eines Deckels 19, als bewegbarer Teil des Möbels 17, an einem Korpus 18 des Möbels 17 aufweist, dargestellt.

Die Antriebsvorrichtung 1 umfasst ein Beschlagelement 2, das zwei Verbindungsabschnitt 3, 3' aufweist, über die das Beschlagelement 2 mit dem Deckel 19 des Möbels 17 fest verbunden ist. Das Beschlagelement 2 weist zudem einen Lagerabschnitt 4 auf, in dem ein Schwenkelement 5 eingesetzt ist. Hierzu erstreckt sich das Schwenkelement 5 durch eine Öffnung im Lagerabschnitt 4 des Beschlagelements 2. Das Schwenkelement 5 ist im vorliegenden Fall als Bolzen ausgestaltet.

Das Beschlagelement 2 ist über das Schwenkelement 5 um eine erste Schwenkachse schwenkbar mit einem Stellelement 6 verbunden.

Das Stellelement 6 ist rohrförmig ausgeführt und beschreibt eine Längsachse L1. Das Stellelement 6 weist einen Zylinderabschnitt 7, ein ersten Anschlag 8 und einen zweiten Anschlag 9 auf. Das Stellelement 6 weist eine Öffnung auf, in dem das Schwenkelement 5 aufgenommen ist. Die Öffnung des Stelleelementes 6 ist in einem ersten Endbereich des Zylinderabschnitts 7 angeordnet.

Der erste Anschlag 8 ist in einem zweiten Endbereich des Zylinderabschnitts 7 angeordnet, der zu dem ersten Endbereich des Zylinderabschnitts 7 gegenüberliegend angeordnet ist. Der erste Anschlag 8 wird durch einen nach radial innen stehenden, ringförmigen Absatz 22 gebildet. Alternativ ist auch denkbar, dass der Absatz 22 nur über ein Teil des Umfangs ausgebildet ist.

Der zweite Anschlag 9 ist in einem axialen Abstand von dem ersten Anschlag 8 angeordnet und wird von einer Anschlaghülse 10 gebildet. Die Anschlaghülse 10 ist komplementär zu der Innenkontur des Zylinderabschnitts 7 des Stellelements 6 ausgestaltet und in den Zylinderabschnitt 7 eingesetzt. Die Anschlaghülse 10 wird durch das Schwenkelement 5 in axialer Richtung fixiert, wobei das Schwenkelement 5 in zu dessen Außenkontur komplementär ausgestalteten Aufnahmeausnehmungen der Anschlaghülse 10 eingreift. Alternativ ist es auch denkbar, dass die Anschlaghülse 10 in den Zylinderabschnitt 7 des Stellelementes 6 eingepresst ist.

Der Absatz 22 des ersten Anschlags 8 weist eine Öffnung auf, durch die sich ein erstes Gewindeelement in Form einer Gewindestange 12 hindurch erstreckt, die von einem Motor 13 drehend antreibbar ist. Die Drehachse D1 des Motors 13 ist dabei koaxial zu einer Drehachse D2 der Gewindestange 12 angeordnet. Die Drehachse D2 der Gewindestange 12 ist im vorliegenden Fall koaxial zu der Längsachse L2 der Gewindestange 12. Die Anschlaghülse 10 weist eine durchgehende Öffnung auf, in die sich die Gewindestange 12 hinein erstreckt. Alternativ ist es auch denkbar, dass die Öffnung der Anschlaghülse 10 an dem Beschlagelement 2 zugewandten Ende geschlossen ist.

Auf der Gewindestange 12 sitzt ein zweites Gewindeelement in Form einer Spindelmutter 11, wobei diese axial zwischen dem ersten Anschlag 8 und dem zweiten Anschlag 9 des Stelleelementes 6 angeordnet ist. Die Spindelmutter 11 weist ein Innengewinde auf, das mit einem Außengewinde der Gewindestange 12 in Eingriff ist. Die Außenkontur der Spindelmutter 11 ist komplementär zu der Innenkontur des Zylinderabschnitts 7 des Stelleelementes 6 in dem Bereich zwischen dem ersten Anschlag 8 und dem zweiten Anschlag 9 ausgestaltet. Die Innenkontur des Zylinderabschnitts 7 des Stellelementes 6 ist dabei zumindest in dem Bereich zwischen dem ersten Anschlag 8 und dem zweiten Anschlag 9 im Querschnitt von einem Kreis abweichend ausgestaltet. Die Spindelmutter 11 wird somit bei Rotation der Gewindestange 12 entlang dieser translatorisch verschoben. Die Spindelmutter 11 ist somit relativ zu der Gewindestange 12 entlang einer Bewegungsachse B verschiebbar angeordnet. Die Drehachse D1 des Motors 13 und die Drehachse D2 der Gewindestange 12 sind koaxial zu der Bewegungsachse B angeordnet.

Eine zylinderförmige Einhüllende der Spindelmutter 11 entlang der Bewegungsachse B weist jeweils einen größeren Durchmesser auf als der größte einbeschriebene Zylinder der Öffnung des ersten Anschlag 8 und der Öffnung der Anschlaghülse 10 entlang der Bewegungsachse B. Die Spindelmutter 11 kann somit durch Rotation der Gewindestange 12 sowohl mit dem ersten Anschlag 8 als auch mit dem zweiten Anschlag 9 axial in Anlage gebracht werden, ohne durch die Öffnung des jeweiligen Anschlags 8, 9 hindurch treten zu können.

Der Motor 13, die Gewindestange 12, die Spindelmutter 11 und das Stellelement 6 sind in einer Lageranordnung 14 aufgenommen. Die Lageranordnung 14 umfasst ein Gehäuse 15 und ein Lagerelement 16. Das Gehäuse 15 umfasst einen Aufnahmeraum 27, in dem der Motor 13 drehfest und axial fest aufgenommen ist. Das Gehäuse 15 umfasst zudem einen Zylinderabschnitt 28, der axial an den Aufnahmeraum 27 angrenzt, und in dem das Stellelement 6 axial verschiebbar gelagert ist. Der Motor 13 weist einen Sensor 36 zur Erfassung der Längsposition der Spindelmutter 11 auf. Der Sensor 36 ist als Drehwinkelsensor ausgestaltet, der die Winkelposition der Gewindestange 12. Zur Ermittlung der Längsposition der Spindelmutter 11 aus der Winkelposition der Gewindestange 12 muss der Sensor 36 nach der Montage kalibriert werden, wobei eine erste Endlage der Spindelmutter 11, in der die Spindelmutter 11 in Anlage mit dem ersten Anschlag 8 ist, und eine zweite Endlager der Spindelmutter 11, in der die Spindelmutter 11 in Anlage mit dem zweiten Anschlag 9 ist, angefahren wird.

Das Lagerelement 16 ist an dem Korpus 18 des Möbels 17 befestigt und mit dem Gehäuse 15 um eine zweite Schwenkachse schwenkbar verbunden. Die erste Schwenkachse des Schwenkelements 5 und die zweite Schwenkachse des Lagerelements 16 sind dabei parallel zueinander angeordnet.

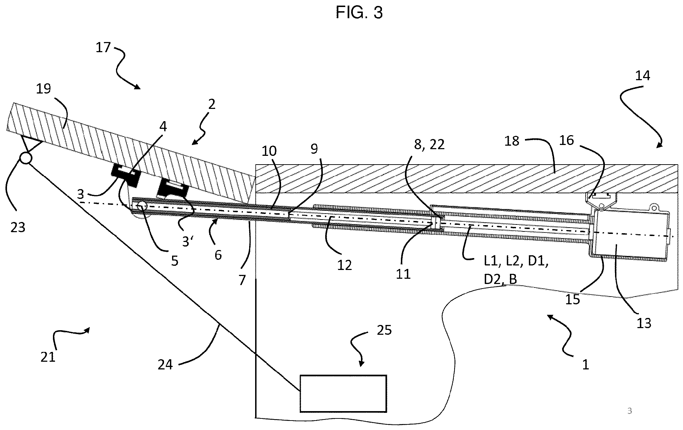

Die Beschlaganordnung umfasst zudem eine Halteanordnung 21, die der Übersichtlichkeit halber nur in Figur 3 schematisch dargestellt ist. Die Halteanordnung 21 weist ein Beschlagelement 23 auf, dass mit dem Deckel 19 des Möbels 17 fest verbunden ist. An dem Beschlagelement 23 ist ein Stellarm 24 schwenkbar um eine dritte Schwenkachse angeordnet. Die dritte Schwenkachse ist zu der ersten Schwenkachse des Schwenkelements 5 und der zweiten Schwenkachse des Lagerelementes 16 parallel angeordnet. Der Stellarm 24 ist über eine Feder-Lager-Anordnung 25 mit dem Korpus 18 des Möbels 17 um eine vierte Schwenkachse schwenkbar verbunden. Die vierte Schwenkachse ist dabei parallel zu der dritten Schwenkachse angeordnet. Von der Feder-Lager-Anordnung 25 wird der Stellarm 24 in Abhängigkeit des Öffnungsgrades das Deckels 19 mit einer Kraft beaufschlagt, sodass der Deckel 19 zumindest in vollständiger geöffnetem Zustand, also in der Offenstellung, verbleibt. Darüber hinaus kann die Feder-Lager-Anordnung 25 den Stellarm 24 in einer Position, in der der Deckel 19 den Korpus 18 des Möbels 17 verschließt, derart mit einer Federkraft beaufschlagen, dass der Deckel 19 in der Schließstellung gehalten wird. Es kann vorgesehen sein, dass die Offenstellung des Deckels 19 variabel eingestellt werden kann.

Die Antriebsvorrichtung 1 ist in Figur 1 in neutraler, geschlossener Stellung dargestellt. Hierbei verschließt der Deckel 19 den Korpus 18 des Möbels 17. Die Spindelmutter 11 ist in axialer Anlage mit dem zweiten Anschlag 9, wobei die Spindelmutter 11 maximal eine Axialkraft auf den zweiten Anschlag 9 ausübt, sodass der Deckel 19 gerade in der Schließstellung verbleibt und sich nicht öffnet. Wird die Gewindestange 12 von dem Motor 13 nun so angetrieben, dass die Spindelmutter 11 in Richtung des Beschlagelements 2 verschoben wird, bewegt sich das Stellelement 6 in axialer Richtung von dem Motor 13 weg. Diese Bewegung wird von dem Beschlagelement 2 auf den Deckel 19 übertragen, sodass sich der Deckel 19 ohne signifikante Verzögerung aus der Schließstellung in Richtung der Offenstellung bewegt. Alternativ ist es auch denkbar, dass die Spindelmutter 11 in der neutralen, geschlossenen Stellung der Antriebsvorrichtung 1 beabstandet von dem zweiten Anschlag 9 angeordnet ist, wobei der Abstand vor dem Öffnen des Deckels 19 überwunden werden muss.

In der neutralen, geschlossenen Stellung der Antriebsvorrichtung 1 kann der Deckel 19 zudem manuell in die Offenstellung überführt werden, da die Spindelmutter 11 die Bewegung des Stellelements 6 in Richtung der Offenstellung nicht blockiert.

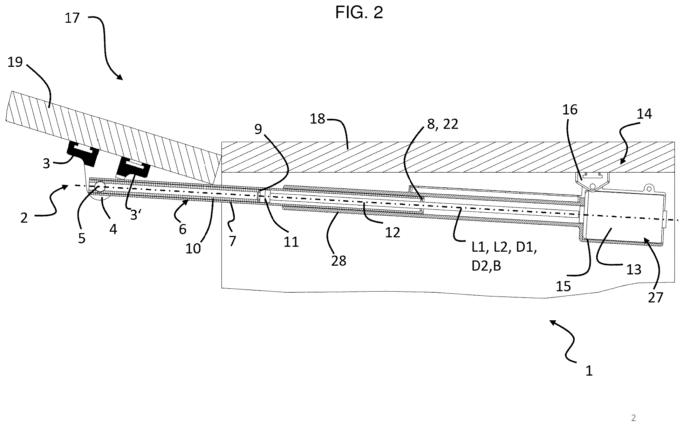

In Figur 2 wird die Antriebsvorrichtung 1 in aktiver, geöffneter Stellung dargestellt. Hierbei ist der Deckel 19 in seiner Offenstellung. Die Spindelmutter 11 ist weiterhin in axialer Anlage mit dem zweiten Anlageabschnitt 9 und übt eine Axialkraft auf den zweiten Anschlag 9 aus, sodass der Deckel 19 in der Offenstellung verbleibt. In der aktiven, geöffneten Stellung blockiert die Antriebsvorrichtung 1 den Deckel 19, sodass ein manuelles Schließen des Deckels 19 nicht möglich ist.

Aus der in Figur 2 gezeigten aktiven, geöffneten Stellung der Antriebsvorrichtung 1, kann diese in eine in Figur 3 dargestellte neutrale, geöffnete Stellung überführt werden. Hierzu wird die Gewindestange 12 von dem Motor 13 so angetrieben, dass die Spindelmutter 11 von dem Beschlagelement 2 weg verschoben wird. Dabei wird, nach Abbau der von der Spindelmutter 11 auf den zweiten Anschlag 9 wirkenden Axialkraft, der Deckel 19 von der Halteanordnung 21 in der Offenstellung gehalten. Die Spindelmutter 11 wird soweit axial verschoben, bis diese mit dem ersten Anschlag 8 in Anlage kommt. In der neutralen, geöffneten Stellung der Antriebsvorrichtung 1 ist die von der Spindelmutter 11 auf den ersten Anschlag 8 aufgebrachte Axialkraft so gewählt, dass der Deckel 19 von der Halteanordnung 21 in der Offenstellung gehalten wird. Alternativ ist allerdings auch denkbar, dass die Spindelmutter 11 von dem ersten Anschlag 8 beabstandet angeordnet ist, wobei vor einem motorischen Verschließen des Korpus 18 des Möbels 17 mit dem Deckel 19 der Abstand überwunden werden muss. In der in Figur 3 dargestellten neutralen, geöffneten Stellung blockiert die Antriebsvorrichtung 1 den Deckel 19 nicht, sodass dieser manuell geschlossen werden kann, in dem die von der Halteanordnung 21 auf den Deckel 19 wirkende Kraft manuell überwunden wird.

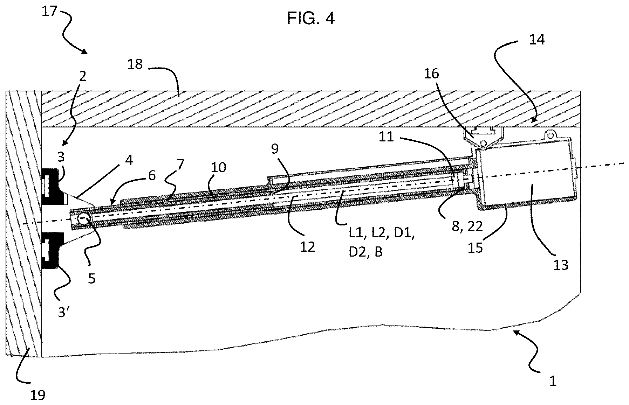

Um den Korpus 18 des Möbels 17 mit dem Deckel 19 zu verschließen, kann die Antriebsvorrichtung 1 von der in Figur 3 dargestellten neutralen, geöffneten Stellung in die in Figur 4 dargestellte aktive, geschlossenen Stellung überführt werden. Hierzu wird die Spindelmutter 11 durch Rotation der Gewindestange 12 weiter in Richtung des Motors 13 verschoben. Hierdurch wird das Stellelement 6 ebenfalls in Richtung des Motors 13 verschoben, wobei diese Bewegung über das Beschlagelement 2 auf den Deckel 19 übertragen wird. In der aktiven, geschlossenen Stellung der Antriebsvorrichtung 1 verschließt der Deckel 19 den Korpus 18 des Möbels 17 vollständig. Von der Spindelmutter 11 wird eine Axialkraft auf den ersten Anschlag 8 ausgeübt, sodass der Deckel 19 gegen den Korpus 18 des Möbels 17 gezogen wird. In der in Figur 4 dargestellten aktiven, geschlossenen Stellung blockiert die Spindelmutter 11 den Deckel, sodass dieser nicht manuell in die Offenstellung überführt werden kann.

Nachfolgend kann die Antriebsvorrichtung 1 von der in Figur 4 dargestellten aktiven, geschlossenen Stellung wieder zurück in die in Figur 1 dargestellte neutrale, geschlossenen Stellung überführt werden.

Nachfolgend werden erfindungsgemäße Antriebsvorrichtungen in einer zweiten, dritten und vierten Ausführungsform beschrieben, die als Alternative an die Stelle der zuvor beschriebenen Antriebsvorrichtung 1 treten können. Es versteht sich, dass diese Ausführungsformen ebenfalls in die zuvor beschriebenen Stellung überführt werden können.

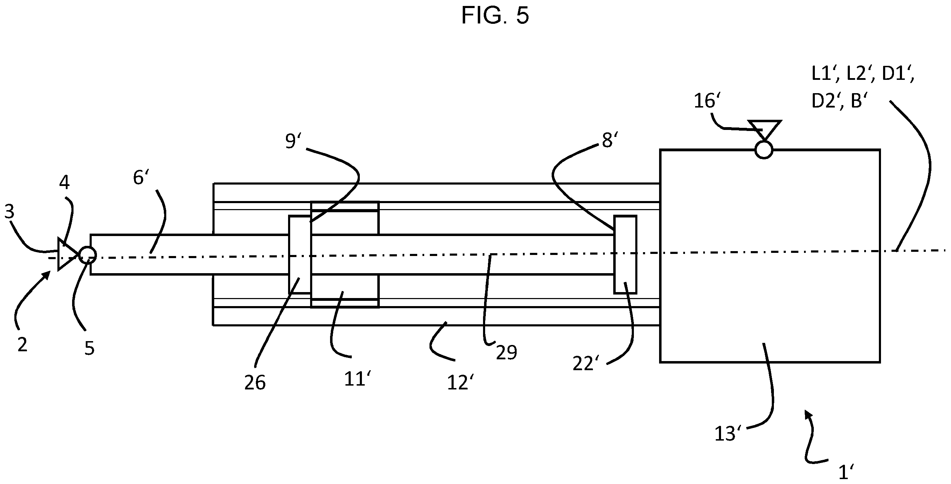

In Figur 5 wird schematisch eine erfindungsgemäße Antriebsvorrichtung 1' in einer zweiten Ausführungsform dargestellt. Die zweite Ausführungsform der Antriebsvorrichtung 1' unterscheidet sich von der ersten Ausführungsform der Antriebsvorrichtung 1 im Wesentlichen durch die Umkehrung der geometrischen Verhältnisse von erstem Gewindeelement, zweitem Gewindeelement und Stellelement. Gleiche beziehungsweise ähnliche Elemente werden mit gleichen Bezugszeichen gekennzeichnet. Bezüglich der Gemeinsamkeiten wird an dieser Stelle abkürzend auf die Ausführungen zu der ersten Ausführungsformen der erfindungsgemäßen Antriebsvorrichtung 1 verwiesen.

Die Antriebsvorrichtung 1' umfasst das Beschlagelement 2, das mit dem Deckel 19 fest verbindbar ist. Das Beschlagelement 2 ist über das Schwenkelement 5 um eine erste Schwenkachse schwenkbar mit einem Stellelement 6' verbunden.

Das Stellelement 6' ist stabförmig ausgeführt und weist einen Stababschnitt 29, einen ersten Anschlag 8' und einen zweiten Anschlag 9' auf. Der erste Anschlag 8' und der zweite Anschlag 9' erstrecken sich von dem Stababschnitt 29 nach radial außen. Zur Montage der Antriebsvorrichtung 1' kann das Stellelement 6'aus zwei Elementen gefügt, insbesondere lösbar gefügt, sein, wobei ein erstes Element den ersten Anschlag 8' und ein zweites Element den zweiten Anschlag 9' aufweist.

Das Stellelement 6' ist in einem ersten Endbereich mit dem Schwenkelement 5 verbunden. Der erste Anschlag 8' ist in einem zweiten Endbereich des Stellelements 6' angeordnet, der zu dem ersten Endbereich gegenüberliegend angeordnet ist. Der erste Anschlag 8' wird durch einen Absatz 22' gebildet. Der Absatz 22' ist vorliegend mit dem restlichen Teil des Stellelements 6' lösbar verbunden. Der zweite Anschlag 9' ist in einem Abstand von dem ersten Anschlag 8' angeordnet und wird von einem Absatz 26 gebildet.

Das Stellelement 6' ist zumindest teilweise in einem ersten Gewindeelement in Form einer Gewindehohlwelle 12' angeordnet, die ein Innengewinde umfasst. Die Gewindehohlwelle 12' ist von einem Motor 13' drehend antreibbar. Die Drehachse D1' des Motors 13' ist dabei koaxial zu der Drehachse D2' der Gewindehohlwelle 12' angeordnet.

Das Innengewinde der Gewindehohlwelle 12' ist mit einem Außengewinde eines zweiten Gewindeelementes in Eingriff. Das zweite Gewindeelement ist vorliegend als Spindelelement 11' mit einem Außengewinde ausgebildet und zwischen dem ersten Anschlag 8' und dem zweiten Anschlag 9' angeordnet. Hierzu weist das Spindelelement 11' eine zentrale durchgehende Öffnung auf, durch die sich das Stellelement 6' hindurch erstreckt. Das Spindelelement 11' kann dabei eine axiale Erstreckung aufweisen, die so groß gewählt ist, dass die Öffnung des Spindelelements 11' ein Schiebelager für das Stellelement 6' bildet. Ein weiteres Element zur verschiebbaren Lagerung des Stelleelementes 6', beispielsweise durch ein Gehäuse, ist somit nicht mehr nötig.

Die Innenkontur der Öffnung des Spindelelements 11' ist komplementär zu der Außenkontur des Stelleelementes 6' in dem Bereich zwischen dem ersten Anschlag 8' und dem zweiten Anschlag 9' ausgestaltet. Die Außenkontur des Stelleelementes 6' ist in dem Bereich zwischen dem ersten Anschlag 8' und dem zweiten Anschlag 9' von rund abweichend ausgestaltet. Das Spindelelement 11' kann sich somit über das Stelleelement 6' an dem Beschlagelement 2 in Umfangsrichtung abstützen, sodass bei Rotation der Gewindehohlwelle 12' das Spindelelement 11' entlang der Gewindehohlwelle 12' translatorisch verschoben wird. Das Spindelelement 11' kann somit in axiale Anlage mit dem ersten Anschlag 8' und dem zweiten Anschlag 9' gebracht werden, um das Stellelement 6' axial entlang einer Bewegungsachse B' zu bewegen.

Eine zylinderförmige Einhüllende entlang der Bewegungsachse B' des Absatzes 22' und des Absatzes 26 weist jeweils einen größeren Durchmesser auf als der größte einbeschriebene Zylinder der Öffnung des Spindelelements 11'. Das Spindelelement 11' kann somit durch Rotation der Gewindehohlwelle 12' sowohl mit dem ersten Anschlag 8' als auch mit dem zweiten Anschlag 9' axial in Anlage gebracht werden.

Der Motor 13' ist über ein Lagerelement 16' um eine zweite Schwenkachse schwenkbar und drehfest um die Drehachse D1' mit dem Korpus 18 des Möbels 17 verbunden. Die erste Schwenkachse des Schwenkelements 5 und die zweite Schwenkachse des Lagerelements 16' sind dabei parallel zueinander ausgerichtet.

Es kann zudem ein in Figur 5 nicht dargestelltes Abdeckelelement vorgesehen sein, das am Korpus 18 des Möbels 17 und/oder dem Motor 13' befestigbar ist. Das Abdeckelelement kann dabei, insbesondere zusammen mit dem Korpus 18, zumindest die Gewindehohlwelle 12' so einhausen, dass im montierten Zustand der Antriebsvorrichtung ein versehentliches Berühren mit der drehbaren Gewindehohlwelle 12' ausgeschlossen ist.

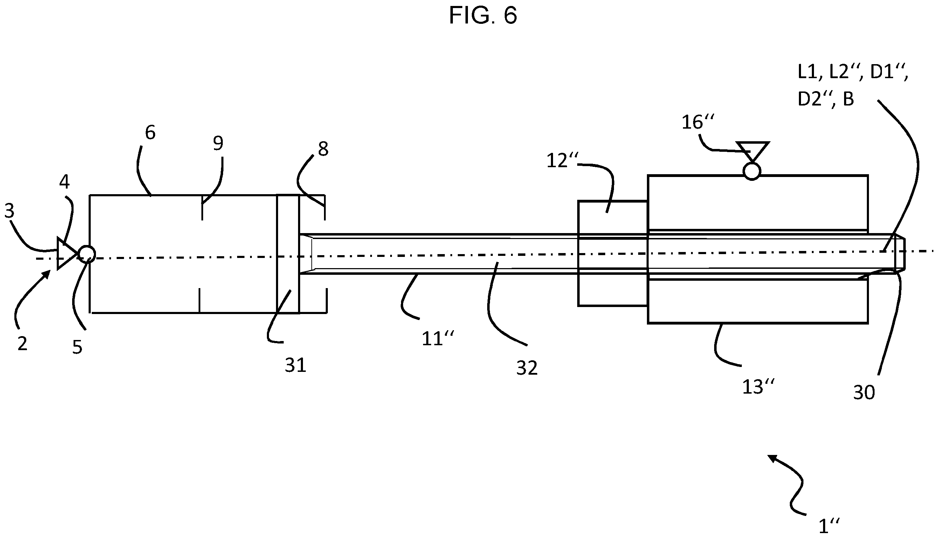

In Figur 6 wird schematisch eine erfindungsgemäße Antriebsvorrichtung 1" in einer dritten Ausführungsform dargestellt. Die dritte Ausführungsform der Antriebsvorrichtung 1" unterscheidet sich von der ersten Ausführungsform der Antriebsvorrichtung 1 im Wesentlichen durch die Umkehrung der geometrischen Verhältnisse von erstem Gewindeelement und zweitem Gewindeelement. Als Stellelement kann in der dritten Ausführungsform das Stellelement 6 der ersten Ausführungsform ohne Änderungen übernommen werden. Gleiche beziehungsweise ähnliche Elemente werden mit gleichen Bezugszeichen gekennzeichnet. Bezüglich der Gemeinsamkeiten wird an dieser Stelle abkürzend auf die Ausführungen zu der ersten Ausführungsformen der erfindungsgemäßen Antriebsvorrichtung 1 verwiesen.

Die Antriebsvorrichtung 1" umfasst ein Beschlagelement 2, das mit dem Deckel 19 fest verbindbar ist. Das Beschlagelement 2 weist das Schwenkelement 5 auf. Das Beschlagelement 2 ist über das Schwenkelement 5 um eine erste Schwenkachse schwenkbar mit dem Stellelement 6 verbunden.

Ein erstes Gewindeelement in Form einer Gewindemutter 12" weist ein Innengewinde auf und ist von einem Motor 13" drehend antreibbar. Ein zweites Gewindeelement in Form einer Gewindestange 11" weist ein Außengewinde auf, das mit dem Innengewinde der Gewindemutter 12" in Eingriff steht. Die Drehachse D1" des Motors 13" ist dabei koaxial zu der Drehachse D2" der Gewindestange 11". Der Motor 13" in weist eine zentrale Öffnung 30 auf, durch die die Gewindestange 11" hindurch bewegbar ist.

Die Gewindestange 11" weist an einem von dem Motor 13" abgewandten Ende einen gewindelosen Schieberabschnitt 31 auf, der sich an einen Stangenabschnitt 32 angrenzt, auf dem das Außengewinde ausgebildet ist. Der Schieberabschnitt 31 ist zwischen dem ersten Anschlag 8 und dem zweiten Anschlag 9 des Stellelements 6 angeordnet.

Der Stangenabschnitt 32 erstreckt sich durch die zentrale Öffnung des ersten Anschlags 8. Der Stangenabschnitt 32 kann dabei eine axiale Erstreckung aufweisen, die so groß gewählt ist, dass der Stangenabschnitt 32 ein Schiebelager für das Stellelement 6' bildet. Ein weiteres Element zur verschiebbaren Lagerung des Stelleelementes 6', beispielsweise durch ein Gehäuse, ist somit nicht mehr nötig.

Der Schieberabschnitt 31 weist eine Außenkontur auf, die komplementär zu der Innenkontur des Stellelements 6 im Bereich zwischen dem ersten Anschlag 8 und dem zweiten Anschlag 9 ausgebildet und von rund verschieden ist. Die Gewindestange 11" kann sich somit über den Schieberabschnitt 31 und das Stellelement 6 an dem Beschlagnahme 2 Umfangsrichtung abstützen, sodass bei Rotation der Gewindemutter 12" die Gewindestange 11" entlang der Drehachse D2" der Gewindemutter 12" translatorisch verschoben wird. Der Schieberabschnitt 31 der Gewindestange 11 "kann somit in axialer Anlage mit dem ersten Anschlag 8 und dem zweiten Anschlag 9 gebracht werden, um das Stellelement 6 axial entlang der Bewegungsachse B zu bewegen.

Eine zylinderförmige Einhüllende entlang der Bewegungsachse B des Schieberabschnitts 31 weist jeweils einen größeren Durchmesser auf als der größte einbeschriebene Zylinder der Öffnung des ersten Anschlags 8 und des zweiten Anschlags 9. Der Schieberabschnitt 31 kann somit durch Rotation der Gewindemutter 12" sowohl mit dem ersten Anschlag 8 als auch mit dem zweiten Anschlag 9 axial in Anlage gebracht werden.

Der Motor 13" ist über ein Lagerelement 16" um eine zweite Schwenkachse schwenkbar und drehfest die Drehachse D1" mit dem Korpus 18 des Möbels 17 verbindbar. Die erste Schwenkachse des Schwenkelements 5 und die zweite Schwenkachse des Lagerelements 16" sind dabei parallel zueinander ausgerichtet.

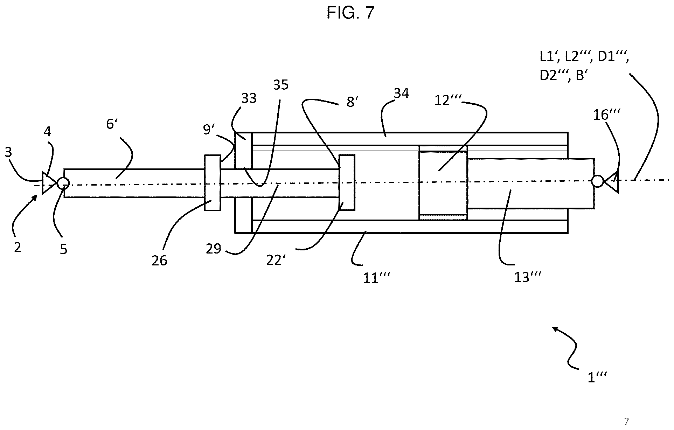

In Figur 7 wird schematisch eine erfindungsgemäße Antriebsvorrichtung 1‴ in einer vierten Ausführungsform dargestellt. Die vierte Ausführungsform der Antriebsvorrichtung 1‴ unterscheidet sich von der ersten Ausführungsform der Antriebsvorrichtung 1 im Wesentlichen durch die Umkehrung der geometrischen Verhältnisse von erstem Gewindeelement und zweitem Gewindeelement. Als Stellelement kann in der vierten Ausführungsform das Stellelement 6' der zweiten Ausführungsform ohne Änderungen übernommen werden. Gleiche beziehungsweise ähnliche Elemente werden mit gleichen Bezugszeichen gekennzeichnet. Bezüglich der Gemeinsamkeiten wird an dieser Stelle abkürzend auf die Ausführungen zu der ersten Ausführungsformen der erfindungsgemäßen Antriebsvorrichtung 1 verwiesen.

Die Antriebsvorrichtung 1‴ umfasst das Beschlagelement 2, das mit dem Deckel 19 fest verbindbar ist. Das Beschlagelement 2 ist über das Schwenkelement 5 um eine erste Schwenkachse schwenkbar mit dem Stellelement 6' verbunden.

Ein erstes Gewindeelement in Form einer Gewindescheibe 12‴ weist ein Außengewinde auf und ist von einem Motor 13‴ drehend antreibbar. Ein zweites Gewindeelement in Form einer Gewindehohlwelle 11‴ weist ein Innengewinde auf, das mit dem Außengewinde der Gewindescheibe 12‴ in Eingriff steht. Die Drehachse D1‴ des Motors 13‴ ist dabei koaxial zu der Drehachse D2‴ der Gewindehohlwelle 11‴.

Die Gewindehohlwelle 11‴ weist an einem von dem Motor 13‴ abgewandten Ende einen gewindelosen Schieberabschnitt 33 auf, der an einen Hohlzylinderabschnitt 34 angrenzt, in deinem das Innengewinde ausgebildet ist. Zur Montage der Antriebsvorrichtung 1‴ kann der Schieberabschnitt 33 mit dem Hohlzylinderabschnitt 34 gefügt, insbesondere lösbar gefügt, sein. Der Schieberabschnitt 33 ist axial zwischen dem ersten Anschlag 8' und dem zweiten Anschlag 9' des Stellelements 6' angeordnet. Der Schieberabschnitt 33 weist eine mittige Öffnung 35 auf, durch die sich der Stababschnitt 29 zwischen dem ersten Anschlag 8' und dem zweiten Anschlag 9' hindurch erstreckt.

Der Schieberabschnitt 33 weist eine Innenkontur auf, die komplementär zu der Außenkontur des Stababschnitts 29 des Stellelements 6' im Bereich zwischen dem ersten Anschlag 8' und dem zweiten Anschlag 9' ausgebildet und von rund verschieden ist. Die Gewindehohlwelle 11‴ kann sich somit über den Schieberabschnitt 33 und das Stellelement 6' an dem Beschlagelement 2 in Umfangsrichtung abstützen, sodass bei Rotation der Gewindescheibe 12‴ die Gewindehohlwelle 11‴ entlang der Drehachse D2‴ der Gewindescheibe 12‴ translatorisch verschoben wird. Der Schieberabschnitt 33 der Gewindehohlwelle 11‴ kann somit in axiale Anlage mit dem ersten Anschlag 8' und dem zweiten Anschlag 9' gebracht werden, um das Stellelement 6' axial entlang der Bewegungsachse B' zu bewegen.

Eine zylinderförmige Einhüllende entlang der Bewegungsachse B' des Absatzes 22' und des Absatzes 26 des Stelleelementes 6' weist jeweils einen größeren Durchmesser auf als der größte einbeschriebene Zylinder der Öffnung des Schieberabschnitts 33 der Gewindehohlwelle 11‴. Der Schieberabschnitt 33 der Gewindehohlwelle 11‴ kann somit durch Rotation der Gewindescheibe 12‴ sowohl mit dem ersten Anschlag 8' als auch mit dem zweiten Anschlag 9' axial in Anlage gebracht werden.

Der Motor 13‴ ist über ein Lagerelement 16‴ um eine zweite Schwenkachse schwenkbar und drehfest die Drehachse D1" mit dem Korpus 18 des Möbels 17 verbindbar. Die erste Schwenkachse des Schwenkelements 5 und die zweite Schwenkachse des Lagerelements 16‴ sind dabei parallel zueinander ausgerichtet.

### Bezugszeichenliste

- 1: Antriebsvorrichtung
- 2: Beschlagelement
- 3: Verbindungsabschnitt
- 4: Lagerabschnitt
- 5: Schwenkelement
- 6: Stellelement
- 7: Zylinderabschnitt
- 8: Erste Anschlag
- 9: Zweiter Anschlag
- 10: Anschlaghülse
- 11: zweites Gewindeelement
- 12: erstes Gewindeelement
- 13: Motor
- 14: Lageranordnung
- 15: Gehäuse
- 16: Lagerelement
- 17: Möbel
- 18: Korpus
- 19: Deckel
- 21: Halteanordnung
- 22: Absatz
- 23: Beschlagelement
- 24: Stellarm
- 25: Feder-Lager-Anordnung
- 26: Absatz
- 27: Aufnahmeraum
- 28: Zylinderabschnitt
- 29: Stababschnitt
- 30: Öffnung
- 31: Schieberabschnitt
- 32: Stangenabschnitt
- 33: Schieberabschnitt
- 34: Hohlzylinderabschnitt
- 35: Öffnung

- B: Bewegungsachse
- D: Drehachse
- L: Längsachse

## Patentansprüche

1. Antriebsvorrichtung zum Bewegen eines bewegbaren Teils eines Möbels (17) zwischen einer Schließ- und einer Offenstellung, umfassend:
einen Motor (13), der über eine Lageranordnung (14) mit einem Korpus (18) des Möbels (17) schwenkbar verbindbar ist,
ein erstes Gewindeelement (12), das von dem Motor (13) drehend antreibbar ist, und
ein zweites Gewindeelement (11), das mit dem ersten Gewindeelement (12) in Eingriff ist, wobei das zweite Gewindeelement (11) bei Rotation des ersten Gewindeelements (12) entlang diesem translatorisch verschoben wird, und
ein Stellelement (6), das relativ zu dem ersten Gewindeelement (12) entlang einer Bewegungsachse (B) verschiebbar angeordnet ist und einen ersten Anschlag (8) sowie einen zweiten Anschlag (9) aufweist, wobei das zweite Gewindeelement (11) relativ zum Stellelement (6) zwischen dem ersten Anschlag (8) und dem zweiten Anschlag (9) des Stellelements (6) axial verstellbar angeordnet ist, und
ein Beschlagelement (2), das mit dem Stellelement (6) schwenkbar verbunden und mit dem bewegbaren Möbelteil (19) verbindbar ist.

2. Antriebsvorrichtung nach Anspruch 1,
**dadurch gekennzeichnet,**
**dass** eine Drehachse (D1) des Motors (13) und eine Drehachse (D2) des ersten Gewindeelements (12) koaxial zu der Bewegungsachse (B) angeordnet sind.

3. Antriebsvorrichtung nach einem der Ansprüche 1 oder 2,
**dadurch gekennzeichnet,**
**dass** die Lageranordnung (14) ein Lagerelement (16) und ein Gehäuse (15) umfasst, wobei der Motor (13) in dem Gehäuse (15) aufgenommen ist und das Gehäuse (15) über das Lagerelement (16) mit dem Korpus (18) des Möbels (17) schwenkbar verbindbar ist.

4. Antriebsvorrichtung nach Anspruch 3,
**dadurch gekennzeichnet,**
**dass** das Gehäuse (15) einen Aufnahmeraum (27) bildet, in dem der Motor (13) aufgenommen ist.

5. Antriebsvorrichtung nach einem der Ansprüche 3 oder 4,
**dadurch gekennzeichnet,**
**dass** das Stellelement (6) axial, insbesondere entlang der Bewegungsachse (B), verschiebbar in dem Gehäuse (15) gelagert ist.

6. Antriebsvorrichtung nach einem der Ansprüche 3 bis 5,
**dadurch gekennzeichnet,**
**dass** das Gehäuse (15) einen Zylinderabschnitt (28) aufweist, in dem das Stellelement (6) axial verschiebbar gelagert ist.

7. Antriebsvorrichtung nach einem der Ansprüche 1 bis 6,
**dadurch gekennzeichnet,**
**dass** das erste Gewindeelement (12) ein Außengewinde aufweist, und
**dass** das zweite Gewindeelement (12) ein Innengewinde aufweist, das mit dem Außengewinde des ersten Gewindeelements (12) in Eingriff steht.

8. Antriebsvorrichtung nach einem der Ansprüche 1 bis 7,
**dadurch gekennzeichnet,**
**dass** der erste Anschlag (8) und der zweite Anschlag (9) jeweils eine mittige Öffnung aufweisen, durch die das erste Gewindeelement (12) hindurch geführt ist.

9. Antriebsvorrichtung nach Anspruch 8,
**dadurch gekennzeichnet,**
**dass** eine Innenkontur des Stellelements (6) zumindest in einem Teilbereich komplementär zu einer Außenkontur zumindest eines Teilbereichs des zweiten Gewindeelements (11) ausgestaltet ist.

10. Antriebsvorrichtung nach einem der Ansprüche 1 bis 9,
**dadurch gekennzeichnet,**
**dass** ein Sensor (36) zum Erfassen eines die Längsposition des zweiten Gewindeelements (11) repräsentierenden Signals vorgesehen ist.

11. Antriebsvorrichtung nach Anspruch 10,
**dadurch gekennzeichnet,**
**dass** der Sensor (36) als Drehwinkelsensor zur Detektion der Winkelposition des ersten Gewindeelements (12) und/oder des zweiten Gewindeelement (11) ausgestaltet ist.

12. Beschlaganordnung zum schwenkbaren Befestigen eines bewegbaren Teils eines Möbels an einen Korpus des Möbels, umfassend:
eine Antriebsvorrichtung (1) nach einem der Ansprüche 1 bis 11 und
eine federkraftbeaufschlagte Halteanordnung (21), durch die das bewegbare Teil des Möbels (17) in der Offenstellung fixierbar ist.

13. Möbel, umfassend:
einen Korpus (18),
ein bewegbares Teil (19), das mit dem Korpus (18) schwenkbar befestigt ist,
eine Antriebsvorrichtung (1) zum Bewegen des bewegbaren Teils (19) zwischen einer Schließ- und einer Offenstellung nach einem der Ansprüche 1 bis 12 und
eine federkraftbeaufschlagte Halteanordnung (21), durch die das bewegbare Teil (19) in der Offenstellung fixierbar ist.

## Claims

1. Drive device for moving a movable part of a piece of furniture (17) between a closed position and an open position, comprising:
a motor (13) pivotably connectable to a body (18) of the piece of furniture (17) via a support assembly (14),
a first threaded element (12) rotatably drivable by the motor (13), and
a second threaded element (11) engaged with said first threaded element (12),
said second threaded element (11) being translationally displaced along said first threaded element (12) upon rotation of said first threaded element (12), and
an actuating element (6), which is arranged displaceably relative to the first threaded element (12) along a axis of motion (B) and has a first stop (8) and a second stop (9), the second threaded element (11) being arranged axially displaceably relative to the actuating element (6) between the first stop (8) and the second stop (9) of the actuating element (6), and
a fitting element (2) pivotally connected to the actuating element (6) and connectable to the movable furniture part (19).

2. Drive device according to claim 1,
**characterized in**
**that** an axis of rotation (D1) of the motor (13) and an axis of rotation (D2) of the first threaded element (12) are arranged coaxially with the axis of motion (B).

3. Drive device according to one of claims 1 or 2,
**characterized in**
**that** the support assembly (14) comprises a bearing element (16) and a housing (15), the motor (13) being accommodated in the housing (15) and the housing (15) being pivotably connectable to the body (18) of the piece of furniture (17) via the bearing element (16).

4. Drive device according to claim 3,
**characterized in**
**that** the housing (15) forms an accommodation chamber (27) in which the motor (13) is accommodated.

5. Drive device according to one of claims 3 or 4,
**characterized in**
**that** the actuating element (6) is mounted in the housing (15) such that it can be displaced axially, in particular along the axis of motion (B).

6. Drive device according to one of claims 3 to 5,
**characterized in**
**that** the housing (15) has a cylinder section (28) in which the actuating element (6) is mounted so as to be axially displaceable.

7. Drive device according to one of claims 1 to 6,
**characterized in**
**that** the first threaded element (12) has an external thread, and
**that** the second threaded element (12) has an internal thread which engages with the external thread of the first threaded element (12).

8. Drive device according to one of claims 1 to 7,
**characterized in**
**that** the first stop (8) and the second stop (9) each have a central opening through which the first threaded element (12) is guided.

9. Drive device according to claim 8,
**characterized in**
**that** an inner contour of the actuating element (6) at least in a partial area is designed to be complementary to an outer contour of at least a partial area of the second threaded element (11).

10. Drive device according to one of claims 1 to 9,
**characterized in**
**that** a sensor (36) is provided for detecting a signal representing the longitudinal position of the second threaded element (11).

11. Drive device according to claim 10,
**characterized in**
**that** the sensor (36) is designed as a rotation angle sensor for detecting the angular position of the first threaded element (12) and/or of the second threaded element (11).

12. A fitting arrangement for pivotally attaching a movable part of a piece of furniture to a body of the furniture, comprising:
a drive device (1) according to one of claims 1 to 11 and
a spring-loaded holding arrangement (21) by means of which the movable part of the piece of furniture (17) can be fixed in the open position.

13. Furniture comprising:
a body (18),
a movable part (19) which is pivotally attached to the body (18),
a drive device (1) for moving the movable part (19) between a closed and an open position according to one of claims 1 to 12, and
a spring-loaded holding arrangement (21) by means of which the movable part (19) can be fixed in the open position.

## Revendications

1. Dispositif d'entraînement permettant de déplacer une partie mobile d'un meuble (17) entre une position de fermeture et une position d'ouverture, comprenant :
un moteur (13), qui peut être relié pouvant pivoter par le biais d'un système de support (14) à un corps (18) du meuble (17),
un premier élément fileté (12), qui peut être entraîné en rotation par le moteur (13), et
un deuxième élément fileté (11), qui est en prise avec le premier élément fileté (12), sachant que le deuxième élément fileté (11) est déplacé lors de la rotation du premier élément fileté (12) de façon translatoire le long de celui-ci, et
un élément de réglage (6), qui est disposé pouvant être déplacé le long d'un axe de déplacement (B) par rapport au premier élément fileté (12) et comporte une première butée (8) ainsi qu'une deuxième butée (9), sachant que le deuxième élément fileté (11) est disposé pouvant être réglé axialement par rapport à l'élément de réglage (6) entre la première butée (8) et la deuxième butée (9) de l'élément de réglage (6), et
un agencement de ferrure (2), qui est relié pouvant pivoter à l'élément de réglage (6) et pouvant être relié à la pièce de meuble mobile (19).

2. Dispositif d'entraînement selon la revendication 1,
**caractérisé en ce qu'**
un axe de rotation (D1) du moteur (13) et un axe de rotation (D2) du premier élément fileté (12) sont disposés coaxialement à l'axe de déplacement (B).

3. Dispositif d'entraînement selon l'une quelconque des revendications 1 ou 2,
**caractérisé en ce que**
le système de support (14) comprend un élément de support (16) et un boîtier (15), sachant que le moteur (13) est logé dans le boîtier (15) et le boîtier (15) peut être relié pouvant pivoter par le biais de l'élément de support (16) au corps (18) du meuble (17).

4. Dispositif d'entraînement selon la revendication 3,
**caractérisé en ce que**
le boîtier (15) forme un espace de logement (27) dans lequel est logé le moteur (13).

5. Dispositif d'entraînement selon l'une quelconque des revendications 3 ou 4,
**caractérisé en ce que**
l'élément de réglage (6) est logé pouvant se déplacer axialement dans le boîtier (15), en particulier le long de l'axe de déplacement (B).

6. Dispositif d'entraînement selon l'une quelconque des revendications 3 à 5,
**caractérisé en ce que**
le boîtier (15) comporte une section cylindrique (28) dans laquelle l'élément de réglage (6) est logé pouvant se déplacer axialement.

7. Dispositif d'entraînement selon l'une quelconque des revendications 1 à 6,
**caractérisé en ce que**
le premier élément fileté (12) comporte un filetage extérieur et
**en ce que** le deuxième élément fileté (12) comporte un filetage intérieur, qui vient en prise avec le filetage extérieur du premier élément fileté (12).

8. Dispositif d'entraînement selon l'une quelconque des revendications 1 à 7,
**caractérisé en ce que**
la première butée (8) et la deuxième butée (9) comportent respectivement une ouverture centrale à travers laquelle le premier élément fileté (12) est passé.

9. Dispositif d'entraînement selon la revendication 8,
**caractérisé en ce qu'**
un contour intérieur de l'élément de réglage (6) est constitué au moins dans une partie de zone de façon complémentaire à un contour extérieur au moins d'une partie de zone du deuxième élément fileté (11).

10. Dispositif d'entraînement selon l'une quelconque des revendications 1 à 9,
**caractérisé en ce qu'**
un capteur (36) est prévu pour la saisie d'un signal représentant la position longitudinale du deuxième élément fileté (11).

11. Dispositif d'entraînement selon la revendication 10,
**caractérisé en ce que**
le capteur (36) est constitué comme un capteur d'angle de rotation destiné à la détection de la position angulaire du premier élément fileté (12) et/ou du deuxième élément fileté (11).

12. Agencement de ferrure pour la fixation pivotable d'une partie mobile d'un meuble sur un corps de meuble, comprenant :
un dispositif d'entraînement (1) selon l'une quelconque des revendications 1 à 11, et
un système de maintien sollicité par l'effet d'un ressort (21) par lequel la partie mobile du meuble (17) peut être fixée dans la position d'ouverture.

13. Meuble, comprenant :
un corps (18),
une partie mobile (19), qui est fixée au corps (18) pouvant pivoter,
un dispositif d'entraînement (1) permettant de déplacer la partie mobile (19) entre une position de fermeture et une position d'ouverture selon l'une quelconque des revendications 1 à 12 et
un système de maintien sollicité par l'effet d'un ressort (21) par lequel la partie mobile (19) peut être fixée dans la position d'ouverture.
